# EUROPÄISCHE PATENTANMELDUNG

(11) **EP 0 938 982 A2**
(43) Veröffentlichungstag der Anmeldung: **01.09.1999**
(21) Anmeldenummer: 98124261.3
(22) Anmeldetag: 18.12.1998
(51) Int. Cl.: B60B 3/00

(54) **Rad für ein Fahrzeug, insbesondere Ersatzrad für ein Kraftfahrzeug**

(30) Priorität: 25.02.1998 DE 19807943
(71) Anmelder: Dr.Ing. h.c.F. Porsche Aktiengesellschaft, 70435 Stuttgart (DE)
(72) Erfinder: Separautzki, Reinhold, 71696 Möglingen (DE); Stach, Jens, 71296 Heimsheim (DE)

(57) **Zusammenfassung**

Ein Rad (1) für ein Fahrzeug, insbesondere ein Ersatzrad für ein Kraftfahrzeug umfaßt eine äußere (3) und innere Felgenschüssel (2), die miteinander verbunden sind, wobei diese gemeinsam ein Felgenbett bilden. Die Felgenschüsseln weisen beabstandet zueinander angeordnete, etwa in Rad-Achsrichtung verlaufende innen- und außenliegende Ringstege mit korrespondierenden stirnseitigen Verbindungsflächen auf. Die Ringstege (5,6) weisen gemeinsam mit den Wandungen (10,11) der beiden Felgenschüsseln einen Ringraum (9) auf, der sich um die Radnabe und von dieser nahe bis zum Felgenbett (4) des Rades hin begrenzt erstreckt.

## Beschreibung

Die Erfindung bezieht sich auf ein Rad für ein Fahrzeug, insbesondere ein Ersatzrad, für ein Kraftfahrzeug, welches eine äußere und innere Felgenschüssel umfaßt, die miteinander verbunden sind, wobei die Felgenteile gemeinsam ein Felgenbett bilden.

Aus der DE 37 38 362 A1 ist ein Rad für ein Kraftfahrzeug bekannt, welches vier Felgenteile umfaßt, die durch Verschraubung miteinander verbunden sind. Die Felge ist aus zwei an einem ebenfalls aus zwei Teilen bestehenden Felgenstern befestigt, der im Nabenbereich zusammensteckbar ausgebildet ist. Desweiteren ist aus der DE 32 05 235 A1 ein Rad bekannt, das aus zwei Felgenschüsseln besteht, die gemeinsam ein Felgenbett bilden. Die Felgenschüsseln sind miteinander durch Schweißungen verbunden, wobei zwischen den Schweißungen ein Hohlraum gebildet wird.

Die Aufgabe der Erfindung besteht darin, ein Rad für ein Fahrzeug, insbesondere ein Ersatzrad für ein Kraftfahrzeug zu schaffen, das in einfacher Weise und gewichtsmäßig leicht herstellbar ist und eine entsprechende Stabilität als Sicherheitselement gewährleistet.

Diese Aufgabe wird erfindungsgemäß durch die Merkmale des Anspruchs 1 gelöst. Weitere vorteilhafte Merkmale beinhalten die Unteransprüche.

Das erfindungsgemäße Rad besteht im wesentlichen aus zwei Felgenschüsseln, welche über korrespondierende stirnseitige Verbindungsflächen an angeformten Ringstegen verbindbar sind. In vorteilhafter Weise können die beiden Felgenteile, nämlich die äußere und die innere Felgenschüssel aus gleichen oder verschiedenen Werkstoffen, wie beisielsweise Leichtmetallegierungen (Mg, Al, Titan) oder aus Kunststoff hergestellt werden. Ebenfalls ist eine Herstellung der Felgenteile aus gepreßtem Blech sowie in einem Gußverfahren möglich.

Zur Verbindung der beiden Felgenteile weisen diese beabstandete Ringstege auf, die beispielsweise über eine Schweißung, wie z.B. eine Elektronenstrahlschweißung oder eine Reibschweißung oder dergleichen Schweißung miteinander verbindbar sind. Gleichfalls ist auch eine Verklebung möglich. Nach einer weiteren Ausführung ist auch eine Kombination von Kleben und Schweißen und/oder einer Verschraubung mit einem teilweise Zusammenstecken denkbar.

Die Felgenteile sind in der Weise ausgeformt, daß sich zwischen dem Felgenbett und der Radnabe ein Ringraum ergibt. Dieser ist einerseits von den Ringstegen und andererseits von den entsprechenden Wänden der Felgenschüsseln begrenzt. Durch diesen ausgebildeten Ringraum wird eine zusätzliche Steifigkeit erzielt.

Die Ausbildung der beiden Felgenschüsseln ist so gewählt, daß der Ringraum von einem äußeren Ringsteg relativ schmaler Breite und einem inneren Ringsteg relativ großer Breite der äußeren Felgenschüssel begrenzt wird. An diese Ringstege schließen sich die korrespondierenden relativ schmalen Ringstege der inneren Felgenschüssel an, die etwa gleich breit sind.

An die innere Felgenschüssel ist vorzugsweise einteilig die Radnabe angeformt, wobei die äußere Felgenschüssel nur eine Wandung zur Bildung des Ringraumes besitzt und keinen Radkastenanteil aufweist. Beide Felgenschüsseln bilden gemeinsam ein Felgenbett zur Aufnahme eines Reifens.

Die stirnseitigen Verbindungsflächen der Ringstege beider Felgenschüsseln sind nahezu in einer gleichen Verbindungsebene angeordnet, so daß beispielsweise durch eine einzige Elektronenstrahlschweißung beide Verbindungsflächen mittels dieses Schweißvorgangs miteinander verbindbar sind.

Die Wandungen der Felgenschüsseln sind nach außen hin leicht gewölbt ausgeführt, so daß sich zu einer Seite einer Radmittenlängsebene der Ringraum erstreckt und an einer anderen Seite der Radmittenlängsebene die Radnabe angeordnet ist. Diese bildet den Boden einer topfförmigen Vertiefung in der äußeren Felgenschüssel.

Zur Verstärkung der beiden Felgenschüsseln können in vorteilhafter erfindungsgemäßer Weise innerhalb des Ringraumes an den Innenwandungen einer oder beider Felgenschüsseln Rippen mit angeformt sein. Diese können sich direkt gegenüberstehen, radial und/oder quer bzw. ringförmig verlaufend sein. Denkbar sind auch solche Rippen nur an einer Innenwandung, die sich dann bis zur anderen Wandung der gegenüberstehenden Felgenschüssel erstrecken. Die Rippen an den Wänden der beiden Felgenschüsseln sind auch auf Lücken bzw. zahnförmig ineinandergreifend denkbar.

Nach einer weiteren erfindungsgemäßen Ausführung wird die Radnabe durch die beiden Felgenschüsseln gebildet, welche in diesem Bereich zusammensteckbar, beispielsweise mit einer Preßpassung, sind. Hierzu ist in der innenliegenden Felgenschüssel eine Ringvertiefung und in der außenliegenden Felgenschüssel einen entsprechend vorstehenden Ringsteg vorgesehen. Die Verbindung erfolgt mittels Radbolzen und/oder einer zusätzlichen Verbindung durch Schweißen oder Kleben. Die weitere Verbindung im Bereich des Felgenbettes erfolgt, wie bei der vorstehenden Ausführungsform.

Nach einer weiteren vorteilhaften erfindungsgemäßen Ausführung sind die Felgenschüsseln als Felgensterne mit Rippen ausgeführt, wobei die Verbindung der Felgenteile gemäß der vorstehenden Ausführungen erfolgt.

Ausführungsbeispiele der Erfindung sind in den Zeichnungen dargestellt und werden im folgenden näher beschrieben.

Es zeigen
- Fig. 1: einen Schnitt durch ein zweiteiliges Rad mit äußerer und innerer Felgenschüssel und einem gemeinsamen Felgenbett,
- Fig. 2: eine schaubildliche Darstellung des Rades gemäß Fig. 1,
- Fig. 2a: eine schaubildliche Darstellung der beiden Felgenschüsseln mit sich überlappenden Ringstegen,
- Fig. 3: eine weitere Ausführungsform eines zweiteiligen Rades im Schnitt mit einer gemeinsamen Radnabenausbildung,
- Fig. 3a: eine Darstellung im Schnitt über die Ausführung mit reibschweißbaren Ringstegen der beiden Felgenschüsseln,
- Fig. 3b: eine Darstellung im Schnitt über die Ausführung der Felgenschüsseln mit einem eingesteckten Ring der äußeren Felgenschüssel in eine Öffnung der inneren Felgenschüssel,
- Fig. 3c: eine weitere Ausführung eines aus zwei Felgenschüsseln bestehenden Rades, bei dem die äußere Felgenschüssel einteilig mit der Felge ausgeführt ist,
- Fig. 4: eine weitere Ausführungsform eines zweiteiligen Rades in schaubildlicher Darstellung mit Speichen und
- Fig. 5: einen Schnitt durch ein Rad gemäß Fig. 4 und
- Fig. 6: einen Schnitt durch das Rad im Bereich der Speichen nach der Linie VI-VI der Fig. 5.

Ein Rad 1, insbesondere ein Ersatzrad für ein Kraftfahrzeug, besteht aus zwei Felgenschüsseln, gebildet aus einer inneren Felgenschüssel 2 und einer äußeren Felgenschüssel 3. Diese sind durch eine Schweißung oder eine Klebung miteinander verbunden, wobei zusätzlich oder ersatzweise auch eine Verbindung durch Schrauben erfolgen kann.

Die Felgenschüsseln 2,3 bilden gemeinsam ein Felgenbett 4 und sind über stirnseitige Verbindungsflächen F1 und F2 an gegenüberstehenden Ringstegen 5, 6 und 7, 8 miteinander verbunden. Diese sind radial beabstandet zueinander angeordnet und bilden zwischen sich einen Ringraum 9, der einerseits von den Ringstegen 5, 6 und 7, 8 und andererseits von den Wandungen 10, 11 der beiden Schüsseln 3, 2 begrenzt ist.

Die äußere Felgenschüssel 3 umfaßt einen Teil bzw. eine Hälfte des Felgenbettes 4 und bildet durch eine entsprechende Ausformung der Wandung einen Teil des Ringraumes 9. Eine Radnabenausbildung ist an dieser Felgenschüssel 3 nicht vorhanden. Die innere Felgenschüssel 2 bildet den weiteren Teil des Felgenbettes 4 und ist mit einer angeformten Radnabe 12 versehen, die Bohrungen 13 für Radschrauben aufweist.

Die Radnabe 12 und der Ringraum 9 sind jeweils zu verschiedenen Seiten einer Radmittenlängsebene X-X angeordnet, wobei das Felgenbett 4 nahezu hälftig von beiden Felgenschüsseln 2, 3 gebildet wird.

Die oberen Ringstege 5, 6 der Felgenschüsseln sind im Grund einer Vertiefung des Felgenbettes 4 angeordnet, wobei die unteren Ringstege 7, 8 nahezu in Verlängerung des äußeren Durchmessers D der Radnabe 12 in einer gemeinsamen zur Radachse R parallelen Ebene verlaufen.

Zur Ausbildung eines im Querschnitt etwa trapezförmigen oder auch eine andere geometrische Form aufweisenden Ringraumes 9 sind die Ringstege 5, 6 relativ schmal und der weitere Verbindungssteg 7 breiter ausgeführt als die Verbindungsstege 5, 6 und 8. Die Stege 7 und 8 schließen einen topfförmigen Raum 14 ein, wobei der Boden von der Radnabe 12 der inneren Felgenschüssel 2 gebildet wird. Innerhalb des Ringraumes 9 ist mindestens eine Rippe denkbar. Diese kann sich kreisförmig, quer oder mit einem Winkel bzw. diagonal im Raum erstrecken und an einer oder beiden Wänden 10, 11 der Felgenschüsseln 2, 3 angeordnet sein. Die Rippen der Felgenschüssel 2, 3 können sich unmittelbar gegenüberstehen oder auch nur an einer Wand angeordnet sein und sich bis zur anderen Wand erstrecken. Es ist auch ein zahnförmiges Ineinandergreifen möglich, wobei die Rippen jeweils gegenüberstehend auf Lücke angeordnet sein können.

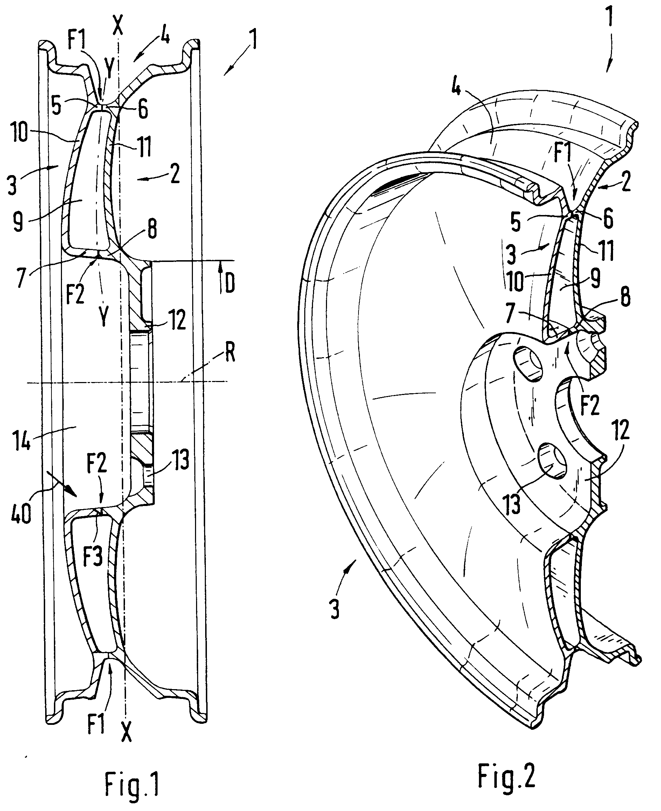

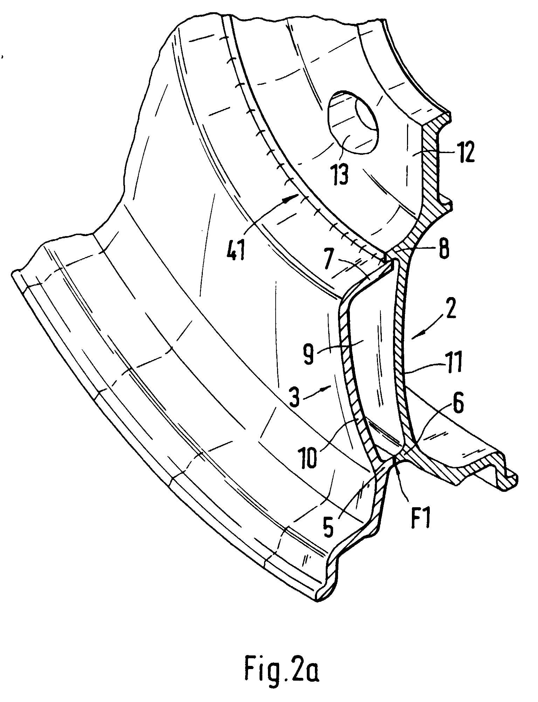

Nach einer Ausführung gemäß Fig. 2 stoßen die Ringstege 7, 8 nicht stumpf aufeinander, sondern überlappen sich. Vorzugsweise ist der Ringsteg 8 innenliegend zum Ringsteg 7 angeordnet. Eine Verbindung durch eine Schweißung oder eine Klebung erfolgt entlang der Ringkante zwischen den beiden Ringstegen 7 und 8.

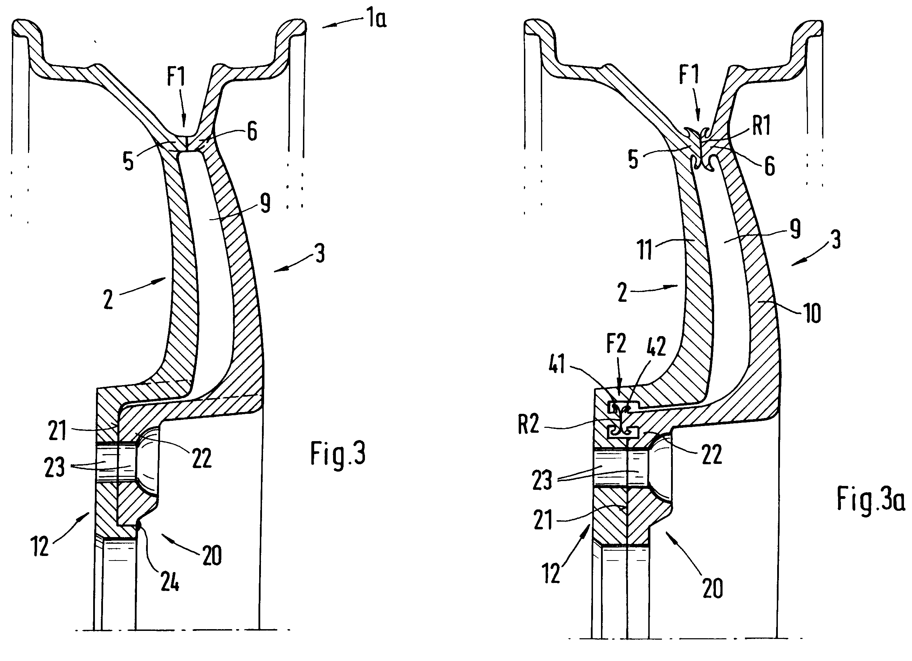

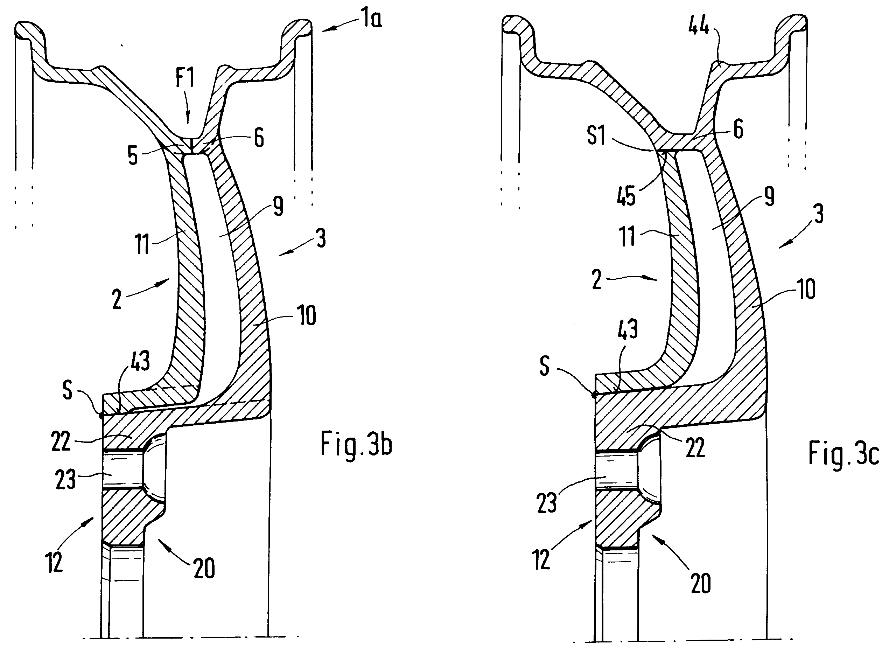

Nach einer weiteren Ausführung gemäß Fig. 3, besteht das Rad 1a aus einer äußeren und einer inneren Felgenschüssel 3a, 2a, die einerseits über die Verbindungsfläche F1 an den Ringstegen 5, 6 und andererseits über eine Steckverbindung 20 im Bereich der Radnabe 12 miteinander befestigt werden.

Diese Steckverbindung 20 umfaßt im wesentlichen an der inneren Felgenschüssel 2 eine Ringvertiefung 21, in welche ein vorstehender Ring 22 der Felgenschüssel 3 eingepaßt gehalten wird. Eine Verbindung erfolgt über die einzusetzenden Radschrauben in die Bohrungen 23. Zusätzlich kann noch eine Verklebung und/oder Verschweißung im Ringbereich 24 vorgenommen werden.

Nach einer weiteren Ausführung gemäß Fig. 3a und Fig. 3b sind die Verbindungsflächen F1 der Ringstege 5 und 6 mittels einer Reibschweißung R1 miteinander verbunden. Desweiteren ist im Bereich der Radnabe 12 eine weitere Verbindung über eine Reibschweißung R2 vorgesehen. In dieser Ausführung wird gemäß Fig. 3 der Nabenbereich als Steilverbindung 20 ausgeführt, wobei die Felgenschüssel 3 einen vorstehenden Ring 22 und die Felgenschüssel 2 eine Ringvertiefung 21 aufweist. In der Ringvertiefung 21 sowie im Ring 22 sind gegenüberstehende Ringe 41, 42 gebildet, welche über die Reibschweißung R2 miteinander verbunden werden.

In der Ausführung gemäß Fig. 3b wird der Ring 22 der Felgenschüssel 3 in eine Öffnung 43 der Felgenschüssel 2 eingesteckt, wobei der Ring 22 etwa bündig mit der Außenfläche der Öffnung 43 abschließt. Eine Verbindung der beiden Felgenschüsseln 2, 3 erfolgt zwischen dem Ring 22 und dem Rand der Öffnung 43 über ein Schweißung S2.

In den Ausführungen gemäß Fig. 3c ist der Nabenbereich mit Ring 22 und Öffnung 43 entsprechend der Ausführung nach Fig. 3b ausgeführt. Die Verbindung der Felge 44, die mit der Felgenschüssel 3 ein Bauteil bildet, mit der Felgenschüssel 2 erfolgt über eine Schweißung S1. Hierzu ist der Ringsteg 6 mit der Felge 44 verbunden und der Rand 45 der Felgenschüssel 2 stößt stumpf an die Felge an und wird mit dieser über die Schweißung S1 verbunden.

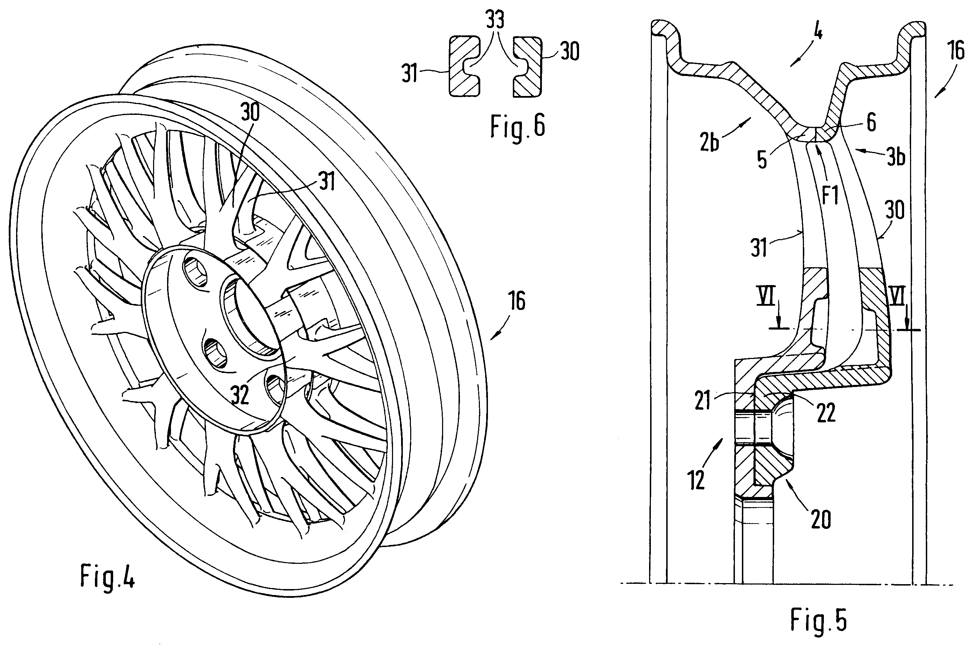

Nach einer weiteren Ausführung gemäß der Fig. 4, 5 und 6 sind die Felgenschüsseln des Rades 1b als sogenannte Felgensterne 2b, 3b mit Speichen 30, 31 versehen. Die Verbindung der beiden Felgensterne 2b und 3b erfolgt im Bereich des Felgenbettes 4 über die Verbindungsfläche F1 der Ringstege 5 und 6. Die weitere Verbindung im Bereich der Radnabe 12 erfolgt wie nach den Ausführungen gemäß Fig. 3 mittels einer Steckverbindung 20. Wie gemäß Fig. 6 näher dargestellt ist, sind die Speichen 30, 31 im Grund 32 durch eine radiale Nut 33 von begrenzter Länge mit einem verminderen Querschnitt versehen.

Die Verbindung der Stege 5, 6 bzw. 7, 8 erfolgt über eine Schweißung. Damit die Schweißrichtung (Pfeilrichtung 40) optimal ist, kann die Verbindungsfläche F3 zwischen den Ringstegen 7, 8 auch schräg ausgeführt sein, wie in Fig. 1 näher gezeigt.

## Patentansprüche

1. Rad für ein Fahrzeug, insbesondere Ersatzrad für ein Kraftfahrzeug, welches eine äußere und innere Felgenschüssel umfaßt, die miteinander verbunden sind, wobei die Felgenteile gemeinsam ein Felgenbett bilden, dadurch gekennzeichnet, daß die Felgenschüsseln (2, 3) beabstandet zueinander angeordnete etwa in Rad-Achsrichtung verlaufende Ringstege (5, 6 und 7, 8; 41, 42) mit korrespondierenden stirnseitigen Verbindungsflächen (F1 und F2) aufweisen und daß die Ringstege (5 bis 8; 41, 42) gemeinsam mit Wandungen (10, 11) der beiden Felgenschüsseln (2, 3) einen Ringraum (9) begrenzen, der sich vom Bereich der Radnabe (12) bis nahe zum Felgenbett (4) des Rades (1) hin erstreckt.

2. Rad für ein Kraftfahrzeug, insbesondere Ersatzrad, welches zwei Felgenschüsseln umfaßt, die miteinander verbunden sind und gemeinsam ein Felgenbett bilden, dadurch gekennzeichnet, daß die innere Felgenschüssel (2) einteilig mit einer Radnabe (12) ausgebildet ist und zwischen Verbindungsstegen (6 und 8) einen Teil eines Ringraumes (9) bildet, der durch die weitere äußere Felgenschüssel (3) ergänzt wird, die keinen Radnabenanteil aufweist.

3. Rad nach den Ansprüchen 1 oder 2, dadurch gekennzeichnet, daß die außenliegenden Ringstege (5, 6) der Felgenschüsseln (2, 3) etwa von gleicher Breite sind und etwa mittig in einer Vertiefung eines Felgenbettes (4) des Rades (1) liegen.

4. Rad nach den Ansprüchen 1, 2 oder 3, dadurch gekennzeichnet, daß die innenliegenden Ringstege (7, 8) im Bereich der Radnabe (12) etwa in einer Ebene mit dem äußeren Durchmesser (D) der Radnabe (12) angeordnet sind.

5. Rad nach den Ansprüchen 1, 2 oder 3, dadurch gekennzeichnet, daß die stirnseitigen Verbindungsflächen (F1 und F2) der Ringstege (5, 6 und 7, 8) annähernd in einer gemeinsamen Verbindungsebene (Y-Y) liegen.

6. Rad nach den Ansprüchen 1, 2, 3, 4 oder 5, dadurch gekennzeichnet, daß die Wandungen (10, 11) der Felgenschüsseln (2, 3) zur Außenseite hin gewölbt ausgebildet sind und der eine Ringsteg (7) der Felgenschüssel (3) eine größere Länge aufweist als der anschließende Ringsteg (8) der Felgenschüssel (2).

7. Rad nach einem oder mehreren der vorhergehenden Ansprüche, dadurch gekennzeichnet, daß an einer Seite einer Mittenlängsebene (X-X) des Rades (1) der von den beiden Felgenschüsseln (2 und 3) gebildete Ringraum (9) an einer Seite der Mittenlängsebene (X-X) und die Radnabe (12) der Felgenschüssel (2) mit Befestigungsöffnungen (13) an der anderen Seite der Mittenlängsebene (X-X) angeordnet ist.

8. Rad nach einem oder mehreren der vorhergehenden Ansprüche, dadurch gekennzeichnet, daß eine innenliegende Stirnfläche der Radnabe (12) und die innenliegenden Ringstege (7, 8) der Felgenschüsseln (2, 3) eine topfförmige Vertiefung (14) ergeben.

9. Rad nach einem oder mehreren der vorhergehenden Ansprüche, dadurch gekennzeichnet, daß die Verbindung der beiden Felgenschüsseln (2, 3) über eine Schweißung, Reibschweißung oder Elektronenstrahlschweißung erfolgt.

10. Rad nach einem oder mehreren der vorhergehenden Ansprüche, dadurch gekennzeichnet, daß die Verbindung der beiden Felgenschüsseln (2, 3) über ein Klebeverfahren erfolgt.

11. Rad nach einem oder mehreren der vorhergehenden Ansprüche, dadurch gekennzeichnet, daß die beiden Felgenschüsseln (2, 3) aus einer Leichtmetallegierung bestehen.

12. Rad nach einem oder mehreren der vorhergehenden Ansprüche, dadurch gekennzeichnet, daß die beiden Felgenschüsseln (2, 3) aus Kunststoff bestehen.

13. Rad nach einem oder mehreren der vorhergehenden Ansprüche, dadurch gekennzeichnet, daß die beiden Felgenschüsseln (2, 3) aus geformten Blechen hergestellt sind.

14. Rad nach einem oder mehreren der vorhergehenden Ansprüche, dadurch gekennzeichnet, daß in dem von den beiden Felgenschüsseln (2, 3) gebildeten Ringraum (9) Rippen vorgesehen sind, die an die Wandungen (10 und/oder 11) angeformt sind.

15. Rad nach einem oder mehreren der vorhergehenden Ansprüche, dadurch gekennzeichnet, daß die Rippen radial und/oder hierzu unter einem Winkel verlaufend angeordnet sind.

16. Rad nach einem oder mehreren der vorhergehenden Ansprüche, dadurch gekennzeichnet, daß die Rippen ringförmig verlaufend angeordnet sind.

17. Rad nach einem oder mehreren der vorhergehenden Ansprüche, dadurch gekennzeichnet, daß die Rippen jeder Wandung (10, 11) sich jeweils gegenüberstehen und/oder zahnförmig ineinandergreifend angeordnet sind.

18. Rad für ein Fahrzeug, insbesondere Ersatzrad für ein Kraftfahrzeug, welches aus zwei Felgenschüsseln besteht, die miteinander verbindbar sind, wobei die Felgenschüsseln gemeinsam ein Felgenbett bilden, dadurch gekennzeichnet, daß die Felgenschüsseln (2, 3) etwa in Achsrichtung verlaufende äußere Ringstege (5, 6) mit korrespondierenden stirnseitigen Verbindungsflächen (F1 und F2) aufweisen und im Bereich der Radnabe (12) die beiden Felgenteile zusammengesteckt gehalten und mittels Radschrauben verbindbar sind und sich zwischen Wandungen der beiden Felgenteile (2, 3) ein Ringraum (9) ausbildet.

19. Rad nach Anspruch 18, dadurch gekennzeichnet, daß die Steckverbindung (20) der beiden Felgenschüsseln (2, 3) aus einer innenliegenden Ringvertiefung (21) der inneren Felgenschüssel (2) und einem vorstehenden Ring (22) der außenliegenden Felgenschüssel (3) besteht.

20. Rad nach den Ansprüchen 18 oder 19, dadurch gekennzeichnet, daß die beiden Felgenschüssel (2, 3) im Bereich der Steckverbindung (20) zusätzlich durch eine Schweißung (24) und/oder Klebung verbunden sind.

21. Rad nach den Ansprüchen 18, 19 oder 20, dadurch gekennzeichnet, daß die Steckverbindung (20) zwischen der Ringvertiefung (21) und dem vorstehenden Ring (22) als Preßpassung ausgeführt ist.

22. Rad nach Anspruch 1, dadurch gekennzeichnet, daß die Felgenschüsseln (2, 3) in den Verbindungsflächen (F1 und F2) durch eine Reibschweißung miteinander verbunden sind, wobei die Felgenschüssel (3) am Ring (22) einen Ringsteg (42) und die Ringvertiefung (21) der Felgenschüssel (2) einen weiteren Ringsteg (41) aufweist, welche zwischen sich die Verbindungsflächen F1 und F2 bilden.

23. Rad nach Anspruch 1, dadurch gekennzeichnet, daß der vorstehende Ring (22) der Felgenschüssel (3) in eine zentrale Öffnung (43) der Felgenschüssel (2) ragt und in dieser über eine Schweißung (S) gehalten wird.

24. Rad nach Anspruch 1, dadurch gekennzeichnet, daß die äußere Felgenschüssel (3) mit einer Felge (44) einteilig ausgebildet ist und mit dem Ringsteg (6) ein stumpf anschließender Rand (45) der inneren Felgenschüssel (2) über ein Schweißung (S1) verbunden ist.

25. Rad nach Anspruch 1, dadurch gekennzeichnet, daß die Ringstege (7 und 8) der beiden Felgenschüsseln (2, 3) sich überlappend angeordnet sind und eine Verbindung über eine Schweißung (41) erfolgt.

26. Rad für ein Fahrzeug, insbesondere Ersatzrad für ein Kraftfahrzeug, welches aus zwei Radteilen besteht, die miteinander verbindbar sind und welche gemeinsam ein Felgenbett bilden, dadurch gekennzeichnet, daß die beiden Radteile als Felgensterne ausgeführt sind und zwischen den Ringstegen (5, 6) des Felgensterns (2b und 3b) jeweils Rippen (30, 31) angeordnet sind.

27. Rad nach Anspruch 26, dadurch gekennzeichnet, daß die Rippen (30) im Grund (32) mit einem verminderten Querschnitt ausgebildet sind, der eine innenliegende radiale Nut (33) von begrenzter Länge aufweist.
